# EUROPEAN PATENT APPLICATION

(11) **EP 1 978 454 A1**
(43) Date of publication of application: **08.10.2008**
(21) Application number: 08006849.7
(22) Date of filing: 04.04.2008
(51) Int. Cl.: G06F 17/30

(54) **System and method for content selection based on user profile data**

(30) Priority: 06.04.2007 US 697626
(71) Applicant: Gemini Mobile Technologies, Inc., San Mateo CA 94403 (US)
(72) Inventor: Ogasawara, Gary Hayato, Foster City, CA 94404 (US)
(74) Representative: Patentanwälte Ruff, Wilhelm, Beier, Dauster & Partner

(57) **Abstract**

Online content is selected based at least in part on user profile data. In one embodiment, user profile data, including individual user characteristics, is stored on a profile server. A profile probability may then be calculated for the individual user characteristics. Subsequent online user behavior is analyzed and used to update the profile probabilities for corresponding user characteristics. In one embodiment, specific online content may then be selected and presented based on the user profile data and/or the updated profile probabilities.

## Description

### FIELD OF THE INVENTION

The present invention relates generally to content selection and presentation, and more particularly to selecting and presenting content in an online context based on user profile data.

### BACKGROUND OF THE INVENTION

The online user experience has evolved dramatically in recent times and now includes the online presentation of all facets of multimedia content. For example, users may access a multitude of online content sources in order to listen to music, download videos, read news articles, socially interact with others, etc. Given the available attention span of the typical online user, along with the limited interactive space around the user, only a limited amount of pre-selected content may be effectively presented to the user. Such pre-selected content may include, for example, online advertising, purchase options, available services and the like.

As more and more users migrate to the online environment, whether virtual or real, there is a corresponding increase in the competition for online users' attention. From the advertising perspective, there is currently no way to accurately select online content, to present to a given online user that would most likely be of interest to that user, such as targeted advertisements or purchase options. One way to alleviate this disconnect would be to match user profile information to specific available online content. However, heretofore this has been a largely ineffective means of identifying user-tailored online content. This is primarily due to the fact that, while users may typically be asked to provide specific demographic and psychographic information as part of routine online signup processes, such users are often leery of divulging personal information, or are simply not truthful with their responses. Accordingly, there is a need for a system and method for online content selection that is based, at least in part, on user profile data.

### SUMMARY OF THE INVENTION

Disclosed and claimed herein is a method, profile server and computer program product for online content selection. In one embodiment, a method includes receiving at least a portion of a user profile data including a user characteristic, calculating a profile probability for the user characteristic, and receiving online user behavior data. The method further includes updating the profile probability for the user characteristic based at least in part on the online user behavior data, and then selecting online content based on the user profile data.

Other aspects, features, and techniques of the invention will be apparent to one skilled in the relevant art in view of the following description of the exemplary embodiments of the invention.

### BRIEF DESCRIPTION OF THE DRAWINGS

The features, objects, and advantages of the present invention will become more apparent from the detailed description set forth below when taken in conjunction with the drawings in which like reference characters identify correspondingly throughout and wherein:

FIG. 1 illustrates a communication system in accordance with an embodiment of the invention;

FIG. 2 depicts a process for selecting content based on user profile data in accordance with one embodiment of the invention; and

FIGs. 3A - 3B depict processes for presenting content based on user profile data according to other embodiments of the invention.

### DETAILED DESCRIPTION OF THE EXEMPLARY EMBODIMENTS

The present disclosure relates generally to selecting and presenting online content based on user profile data. In certain embodiments, user profile data may be received, either during a signup process, or alternatively inferred based on one or more online user actions. The user profile data may be comprised of a plurality of individual characteristics, each of which may have an associated profile probability representative of the level of confidence in the underlying data.

One aspect of the invention is to accumulate user behavior data, preferably from multiple online applications or other sources. In certain embodiments, and as will be described in detail below, such user behavior data may then be used to update the aforementioned profile probabilities and, in turn, the overall user profile data.

In certain embodiments, particular online content may be presented to the subject user based, at least in part, on the updated user profile. Such online content may be selected from among a set of available content based on a "closest match" comparison.

The term "user" as used herein may refer to a particular individual or may refer to one or more "personalities" or "players" created by (or otherwise associated with) that individual. Each such online persona may be visually represented by a so-called "avatar," which refers to the user's visual representation of himself or herself, typically in the form of a two-dimensional icon. In addition, personalities (aka players) may be unique to a given "instance" of an online environment, or may alternatively move between different instances. As such, it should be understood that references to users shall include, when appropriate, such users' online personas.

As used herein, the terms "a" or "an" shall mean one or more than one. The term "plurality" shall mean two or more than two. The term "another" is defined as a second or more. The terms "including" and/or "having" are open ended (e.g., comprising). The term "or" as used herein is to be interpreted as inclusive or meaning any one or any combination. Therefore, "A, B or C" means any of the following: A; B; C; A and B; A and C; B and C; A, B and C. An exception to this definition will occur only when a combination of elements, functions, steps or acts are in some way inherently mutually exclusive. Reference throughout this document to "one embodiment", "certain embodiments", "an embodiment" or similar term means that a particular feature, structure, or characteristic described in connection with the embodiment is included in at least one embodiment of the present invention. Thus, the appearances of such phrases in various places throughout this specification are not necessarily all referring to the same embodiment. Furthermore, the particular features, structures, or characteristics may be combined in any suitable manner on one or more embodiments without limitation.

In accordance with the practices of persons skilled in the art of computer programming, the invention is described below with reference to operations that are performed by a computer system or a like electronic system. Such operations are sometimes referred to as being computer-executed. It will be appreciated that operations that are symbolically represented include the manipulation by a processor, such as a central processing unit, of electrical signals representing data bits and the maintenance of data bits at memory locations, such as in system memory, as well as other processing of signals. The memory locations where data bits are maintained are physical locations that have particular electrical, magnetic, optical, or organic properties corresponding to the data bits.

When implemented in software, the elements of the invention are essentially the code segments to perform the necessary tasks. The code segments can be stored in a processor readable medium, which may include any medium that can store or transfer information. Examples of the processor readable mediums include an electronic circuit, a semiconductor memory device, a read-only memory (ROM), a flash memory or other non-volatile memory, a floppy diskette, a CD-ROM, an optical disk, a hard disk, a fiber optic medium, a radio frequency (RF) link, etc.

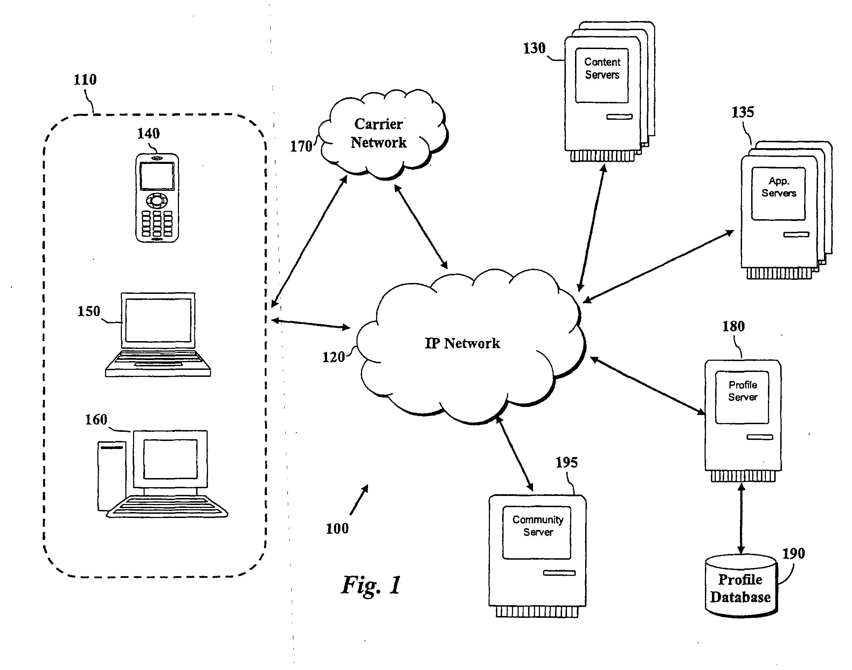

FIG. 1 depicts a communication system 100 in which one or more aspects of the invention may be implemented. In particular, communication system 100 includes an Internet Protocol (IP) network 120 providing communication paths between the user 110, content servers 130, application servers 135 and community server 195. As shown, user 110 may use any number of communication devices to access these various online servers, including wireless device 140 (e.g., cellular telephone, smartphone, personal digital assistant, etc.), portable computer 150 and/or personal computer 160. Where user 110 is using wireless device 140 to connect to the IP network 120, the communication system 100 may further comprise a carrier network 170 configured to provide wireless communications services between the wireless device 140 and the network 120. The carrier network 170 supports at least one wireless communications protocol; such as Global System for Mobile (GSM) communications, General Packet Radio Service (GPRS), Code Division Multiple Access (CDMA) or Wideband CDMA (WCDMA).

Third-party content servers 130 may include any server capable of providing online content over IP network 120, including audio content, video content, streaming media, music, gaming-based content, transaction-based content (e.g., online purchasing), advertising content, text-based content, graphics-based content and any combination thereof. In addition, application servers 135 may be configured to provide various online services and access to online applications. By way of non-limiting example, such services and applications may include Internet searching applications, email applications, location-based applications, fantasy sports, auctions, personals, online dating services, mapping services and news services. It should be appreciated that a wide range of content, services and applications may be provided by servers 130 and 135, and the invention is not intended to be limited to any particular instantiation. It should further be appreciated that servers 130 and 135 may be combined into a single server or collection of servers.

Continuing to refer to FIG. 1, communication system 100 further includes profile server 180 coupled to the IP network 120. While shown separately, profile server 180 and profile database 190 may be a single component, or may similarly be separated into different servers and/or databases operating in conjunction with one another. In any event, profile server 180 may be configured to maintain user profile information on a plurality of users, including user 110, in database 190. Such profile data may include a collection of individual demographic characteristics, such as age, social class, gender, blood type, race, income, mobility (in terms of travel time to work or number of vehicles available), educational attainment, home ownership, employment status, location, etc. In addition, user profile information may include psychographic characteristics, such as personality, values, attitudes, interests, or lifestyles. Moreover, profile server 180 may be configured to collect user profile data from community server 195 alone, or across a plurality of different community servers, content servers 130 and/or application servers 135.

As mentioned above, communication system 100 further includes community server 1951- which is accessible to the user 110 via IP network 120. In certain embodiments, the community server 195 may serve a three-dimensional (3D) environment, such as the 3D environment detailed in U.S. Publication No. 2007/001161, which is hereby fully incorporated by reference. However, community server 195 may similarly be any other type of online environment, such as a two-dimensional (2D) environment. By way of providing non-limiting examples, community server 195 may be a social networking server, an online marketplace server or a gaming server. It should further be appreciated that the community server 195 may be a portal for accessing an online community and may be used as an interface for a variety of applications, content and services such as a community service, dating/match making, online gaming, content browsing, menu-GUI navigation, security service, self-history and journalist/blogger applications.

In certain embodiments, such online communities may be used to connect people through social networking services such as dating services, blogs, instant messaging, mail and online events. The online community may have both a virtual component, as well as a real component. In the case of virtual communities, users can play the part of a character in a virtual world, play games against other people on the network and participate in other virtual services. The virtual community provides virtual services such as gaming communities, virtual shopping and virtual adventure. The content used to represent the virtual community may be provided by the content servers 130, or maintained by the community server 195 itself. Similarly, the various available community-based services and applications may be provided by application server 135, or alternatively by the community server 195 itself.

The community server 195 may be used to access a real community, driven by real space-time (e.g., local time), GPS position, cell position or service area of a wireless carrier. The community content available in the real community is linked to real space-time and is provided to the user within the real community in accordance with real space-time. Real community content and services may be provided by the content servers 130, and may include information supplements such as local news, sports, music and advertising. Information retrieval may be tailored such as to local business, personal, lodging and shopping.

While a single community server 195 has been depicted in FIG. 1, it should equally be appreciated that user 110 may move between many online environments, both within community server 195, as well as between many individual community servers that may also be connected to the IP network 120. However, for simplicity communication system 100 is depicted as having a single community server 195, although the invention is not intended to be limited as such.

As will be described in more detail below, during a signup process with community server 195 or another online registration process, a user 110 may be asked to provide certain demographic data (e.g., age, social class, gender, blood type, race, income, etc.), as well as psychographic data (e.g., values, interests, lifestyles, etc.). This information may be stored by profile server 180 and used to establish an initial user profile for user 110. As will be described below in detail, this user profile data can be used, in accordance with the principles of the invention, to enhance the user experience and facilitate better matching between users, between users and the communities, and between users and content.

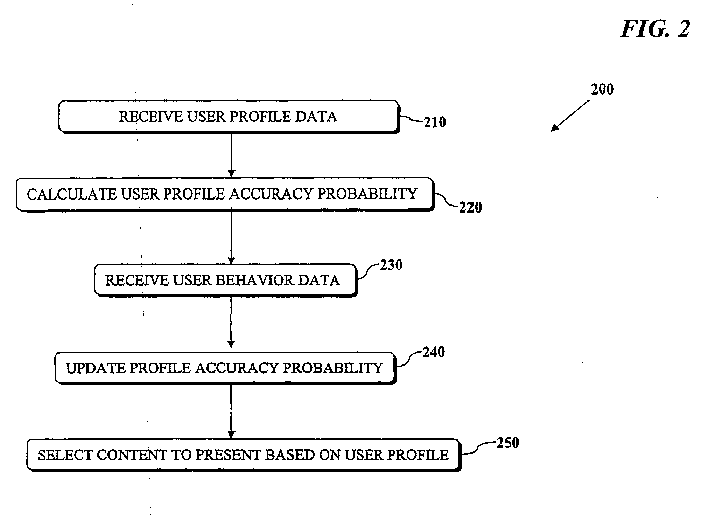

Referring now to FIG. 2, depicted is a process 200 for implementing one embodiment of the invention. Process 200 begins when user profile data is received at block 210. In certain embodiments, the user profile data may be comprised of one or more individual user characteristics, such as individual demographic traits and/or psychographic qualities. Such user profile data may be subsequently stored in an online profile server, such as profile server 180 of FIG. 1. In one embodiment, the operation of block 210 may occur when a subject user (e.g., user 110 of FIG. 1) signs up for, or otherwise establishes an online identity or persona and provides certain profile data during that process. Alternatively, the user profile data of block 210 may be inferred data based on one or more user online actions. Such online actions may include music or video downloading history/habits, online purchase history/habits, and/or advertisement selection history/habits. In addition, profile data of individuals with which the subject user chats or otherwise interacts may be similarly used to infer profile data for the subject user. The spectrum of possible online actions usable to infer profile data may further include a subject user's history or habits for browsing, emailing, texting, gameplaying, social interacting, fantasy sports activities, auctions, personals, navigation and news selection. Essentially, the forms of user activities that can be used to infer profile data are as varied as the types of activities which can be catalogued in a user profile.

Once the subject user's profile data has been received, process 200 may continue to block 220 where a profile probability may be calculated for the individual characteristics which make up the user profile data. In certain embodiments, a profile probability represents the degree to which a person believes the initially provided or inferred data from block 210. To that end, in one embodiment the profile probability may be based on a Bayesian probability analysis, as is generally known in the art. Alternatively, or in conjunction with the Bayesian probability analysis, user-provided data may be automatically assigned a predetermined probability. Moreover, the initial probability for user-provided data may be assigned a value that is based on assumptions relating to the specific characteristic in question. For example, if it is determined that users tend to falsify their age more often than their blood type for example, the initial probability for the age characteristic will be lower than the initial probability for the blood type characteristics.

Process 200 continues to block 230 where user behavior data may be received. As with block 210 above, the user behavior data may be similarly aggregated by the profile server (e.g., profile server 180 of FIG. 1). In one embodiment, such data may be based on the same range of online actions and activities discussed above with reference to the inferred data of block 210. For example, every time a user downloads a song or a video, that choice represents user behavior data. Similarly, every Website visited or online search performed by the subject user is behavior which may be used to infer certain demographic and/or psychographic behavior about the subject user.

In certain embodiments, the scope of online user behavior received at block 230 may be preferably from multiple online applications and/or environments. By way of example, such behavior data may be received from a browser-related source and include behavior data on which Websites the subject user visits. Behavior data may similarly be received from an email application, an online mapping service, a social community application (e.g., community server 195 of FIG. 1), and any other online application which provides content (e.g., content servers 130 of FIG. 1) or an online service or application (e.g., application servers 135 of FIG. 1). In one embodiment, behavior data may be received from multiple online sources by maintaining a persistent user identification across such applications. This may be accomplished by requiring a user login, and then maintaining the login status in a background-executing process as the subject user moves in and out of the various applications. Additional details of how to maintain a persistent login status are known in art and are beyond the scope of the disclosure.

Continuing to refer to FIG. 2, process 200 may move to block 240 where the profile probability for one or more user profile characteristics may be updated based on the behavior data received at block 230. In one embodiment, the operation of block 240 proceeds according to a Bayesian probability analysis pursuant to which the initial profile probability for a given characteristic may be updated in light of the user behavior data received at block 230. However, it should equally be appreciated that any known probability analysis may similarly be employed. By way of a non-limiting simplified example, suppose a user initially indicates that she is a female and 40 years old. Her participating in a multiplayer online role playing game may be considered as inconsistent user behavior for typical 40-year-old females. Thus, this information may result in the probability for her age and/or gender to be correspondingly reduced. The variations on how profile probabilities may be updated are virtually limitless.

As part of the update operation of block 240, it may also be necessary to select which actions warrant updates of which characteristics. To that end, the profile server may, upon receiving the user behavior data, reference a database of which characteristics may be affected by the underlying action embodied in the behavior data received. Once the affected characteristics are identified, the probability analysis may be used to update such characteristics individually, as well as the subject user profile data as a whole.

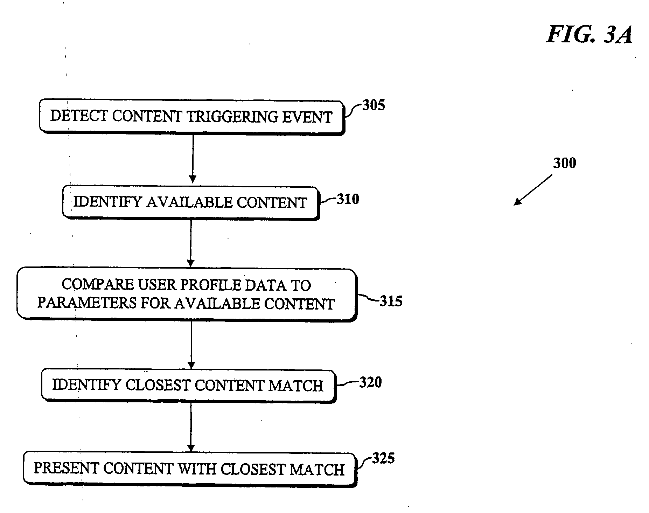

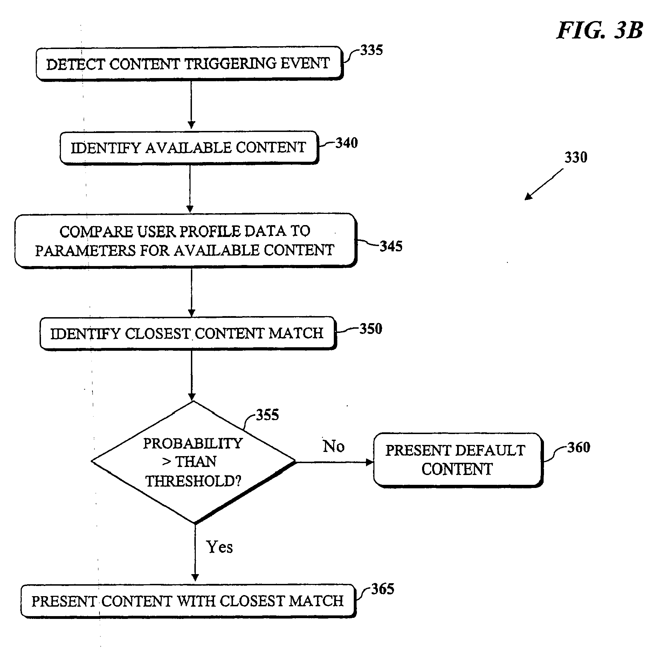

Once the updating operation of block 240 is complete, process 200 continues to block 250 where particular content may be presented to the subject user based, at least in part, on the updated user profile. As will be described in more detail below with reference to the process 300 of FIG. 3, in certain embodiments a particular form of content may be selected from among a set of available content based on a "closest match" comparison.

Referring now to FIG. 3A, depicted is one embodiment of a process 300 for selecting content based at least in part on user profile data, as performed by block 250 of FIG. 2. Process 300 assumes a user profile for a subject user has been established, either from user-provided information, or alternatively inferred from user behavior, in accordance with the principles of the invention.

The selection process 300 may begin with detection of a content triggering event at block 305. By way of a non-limiting example, such a triggering event may include the subject user (e.g., user 110 of FIG. 1) accessing a particular area of an online virtual community. Content triggering events may include virtually any online activity, such as accessing a chat room, entering an online marketplace, selecting to listen to or view content, and of course navigating to a particular area of an online community. It should be appreciated that the occurrence of a content triggering event is merely one way to indicate that the content selection process 300 is to be initiated.

In the case of advertising content, such a triggering event may be that the subject user comes within range of an advertisement slot. That is, in a virtual environment, or even an online real environment, advertising slots may be located at specific locations within the online space. By coming within range of such a slot, the process 300 may interpret this as a triggering event to present an advertisement.

For each triggering event, a collection of available content may be identified at block 310. Where the triggering event is the entering of an online music store, for example, the collection of available content may be a collection of new album advertisements which are displayed to the user while in the store. In one embodiment, such content may be stored on content servers 130, application servers 135 or even community server 195 of FIG. 1, and may correspond to advertising content, music content, video content, purchase options, etc.

Process 300 then continues to block 315 where a comparison of the user's profile data may be made against one or more parameters associated with the identified available content of block 310. In one embodiment, this operation is performed by accessing profile data for the subject user from a profile server (e.g., profile server 180 of FIG. 1). As previously discussed, such profile data may comprise both demographic as well as psychographic data. In addition, such profile data may be updated using process 200 of FIG. 2 based on online user behavior collected from multiple online applications and/or environments.

In certain embodiments, the comparison operation of block 315 may be performed by comparing targeting data embedded or otherwise associated with the content. In one embodiment, this targeting data may be in the form of keywords which are representative of the type of music embodied in the particular advertisement. Again, in the context of an online music store, profile data such as age, gender and/or general music interests may be matched to a set of music advertisements.

Additionally, in certain embodiments it may be preferable for the comparison operation of block 315 to be context sensitive. That is, content parameters/keywords may have different meanings in different contexts. By way of example, the keyword 'java' can refer to coffee when communicated in a dating service context (e.g., "Would you like to get some java?"), or it can be a programming language when communicated in a software developer's chat forum.

Continuing to refer to FIG. 3A, process 300 continues to block 320 where a "closeness match" analysis may be performed. In one embodiment, this involves a determination of the closeness between the available content and corresponding user characteristics based on the comparison performed at block 315. Such a "closeness match" may include a comparison of common keywords, overlapping ranges, etc.

Based on the closeness matching of block 320, process 300 may then present to the subject user the selected content from the set of available content which most closely represents content of interest to the subject user. Again, in the example of music advertisements, block 320 may include displaying on a virtual wall of the music store a clickable advertisement to purchase the new album for a particular band which the user's profile data indicates has a high probability of being of interest to the subject user.

While the description of process 300 has included specific reference to music advertisements, it should of course be appreciated that this is but one narrow example and that the principles and operations of process 300 may similarly be applied in a multitude of contexts and is not intended to be limited as such.

FIG. 3B depicts another embodiment of the process 300 of FIG. 3A. As shown, process 330 mirrors process 300 in that it begins with the detection of a content triggering event at block 335, followed by the identification of available content at block 340. Similarly, process 330 also includes the same comparison of profile data to content parameters (block 345), and closeness matching operation (block 350) discussed in detail above with reference to process 300. For brevity, the discussion above corresponding to blocks 305 - 320 of FIG. 3A is hereby incorporated into the present discussion of blocks 335 - 350 of FIG. 3B.

With that said, process 330 of FIG. 3B differs from process 300 of FIG. 3A
in that a determination is made at block 355 as to whether the probability underlying the user characteristic that was used in the closeness matching operation of block 350 exceeds a predetermined threshold. That is, if content has been identified as having a close match to one or more user characteristics, but the probability of those characteristics being accurate is relatively low, the quality of the overall match may similarly be low. As such, if it is determined that the probability for the characteristic in question does not exceed the threshold value, process 330 may proceed to block 360 where default content may be presented instead. If, on the other hand, the probability in question exceeds the threshold value then process 300 may move to block 365 where the user-matched content may be presented. Depending on the form of such content, its presentation may include a graphical component, an audible component, a text-based component or any combination thereof.

The desire to present default content, such as a default advertisements, unless some minimum threshold is reached may be attractive to would-be online advertisers. In this fashion, advertisers can continue to generically advertise their products to attract and/or shape interest, while also capitalizing on the advantages of targeted advertising.

While the invention has been described in connection with various embodiments, it should be understood that the invention is capable of further modifications. This application is intended to cover any variations, uses or adaptation of the invention following, in general, the principles of the invention, and including such departure from the present disclosure as come within the known and customary practice within the art to which the invention pertains.

## Claims

1. A method for online content selection comprising the acts of:
receiving at least a portion of a user profile data including a user characteristic;
calculating a profile probability for the user characteristic;
receiving online user behavior data;
updating the profile probability for the user characteristic based at least in part on said online user behavior data; and
selecting online content based on the user profile data.

2. The method of claim 1, further comprising updating the user profile data based at least in part on said online user behavior data, and wherein selecting online content comprises selecting online content based on matching at least the portion of the user profile data to one or more characteristics of the online content.

3. The method of claim 1 or 2, wherein calculating the profile probability comprises assigning a value to the user characteristic representative of a degree of belief about in user characteristic.

4. The method of any of the preceding claims, wherein receiving the online user behavior data comprises receiving online user behavior data from a plurality of separate online applications.

5. The method of any of the preceding claims, wherein the user profile data is comprised of a plurality of user characteristics including one or more of age, social class, gender, blood type, race, income, education level, home ownership status, employment status, geographical location, residency, citizenship, physical traits, personality traits, moral values, interests and lifestyles.

6. The method of any of the preceding claims, wherein updating the profile probability comprises increasing the profile probability of the user characteristic when the online user behavior data is consistent with the user characteristic, and decreasing the profile probability of the user characteristic when the online user behavior data is inconsistent with the user characteristic.

7. The method of any of the preceding claims, wherein selecting online content comprises selecting an advertisement from a set of available advertisements,

8. The method of any of the preceding claims, further comprising the act of presenting the online content to a user in an online environment.

9. The method of any of the preceding claims, wherein selecting online content comprises selecting online content based on the user profile data and the profile probability.

10. The method of any of the preceding claims, further comprising, prior to said selecting, the acts of:
detecting a content triggering event;
identifying a set of available content having associated parameters in response to said detecting;
comparing the user profile data to the associated parameters of the set of available content; and
identifying a closest match between the user profile data and one of the set of available content, wherein said selecting comprises selecting the online content corresponding to the closest match.

11. The method of any of the preceding claims, further comprising the acts of:
comparing the profile probability to a threshold value;
displaying the selected online content if the profile probability exceeds the threshold value; and
displaying default content when the profile probability does not exceed the threshold value.

12. A profile server configured to provide online content over a network, the profile server comprising:
a network interface configured to connect the server to the network and to receive user profile data including a user characteristic, and to receive online user behavior data;
a memory containing processor-executable instructions for implementing online content selection; and
a processor electrically coupled to the memory, the processor configured to execute the processor-executable instructions to:
calculate a profile probability for the user characteristic,
update the profile probability for the user characteristic based at least in part on said online user behavior data, and
select online content based on the user profile data.

13. The profile server of claim 12, wherein the processor is further configured to execute the processor-executable instructions to update the user profile data based at least in part on said online user behavior data, and wherein the processor is to select the online content based on matching at least the portion of the user profile data to one or more characteristics of the online content.

14. The profile server of claim 12 or 13, wherein the profile probability comprises a set of values representative of a degree of belief in the user characteristic.

15. The profile server of any of claims 12 to 14, wherein the online user behavior data is received from a plurality of separate online applications.

16. The profile server of any of claims 12 to 15, wherein the user profile data is comprised of a plurality of user characteristics including one or more of age, social class, gender, blood type, race, income, education level, home ownership status, employment status, geographic location, residency, citizenship, physical traits, personality traits, moral values, interests and lifestyles.

17. The profile server of any of claims 12 to 16, wherein the profile probability is increased when the online user behavior data is consistent with the user characteristic, and wherein the profile probability is decreased when the online user behavior data is inconsistent with the user characteristic.

18. The profile server of any of claims 12 to 17, wherein said online content comprises an advertisement selected from a set of available advertisements.

19. The profile server of any of claims 12 to 18, wherein the processor is further configured to execute the processor-executable instructions to present the online content to a user in an online environment.

20. The profile server of any of claims 12 to 19, wherein the online content is selected based on the user profile data and the profile probability.

21. The profile server of any of claims 12 to 20, wherein the processor is further configured to execute the processor-executable instructions to:
detect a content triggering event;
identify a set of available content having associated parameters in response to said detecting;
compare the user profile data to the associated parameters of the set of available content; and
identify a closest match between the user profile data and one of the set of available content, wherein said selecting comprises selecting the online content corresponding to the closest match.

22. The profile server of any of claims 12 to 21, wherein the processor is further configured to execute the processor-executable instructions to:
compare the profile probability to a threshold value;
display the selected online content if the profile probability exceeds the threshold value; and
display default content when the profile probability does not exceed the threshold value.

23. A computer program product, comprising:
a processor readable medium having processor executable code embodied therein to enable online content selection, the processor readable medium having:
processor executable program code to receive user profile data including a user characteristic;
processor executable program code to calculate a profile probability for the user characteristic;
processor executable program code to receive online user behavior data;
processor executable program code to update the profile probability for the user characteristic based at least in part on said online user behavior data; and
processor executable program code to select online content based on the user profile data.

24. The computer program product of claim 23, wherein the processor readable medium further includes processor executable program code to update the user profile data based at least in part on said online user behavior data, and wherein the processor executable program code to select online content comprises processor executable program code to select online content based on matching at least the portion of the user profile data to one or more characteristics of the online content.

25. The computer program product of claim 23 or 24, wherein the processor executable program code to calculate the profile probability comprises processor executable program code to assign a value to the user characteristic representative of the probability that the user characteristic is true.

26. The computer program product of any of claims 23 to 25, wherein the processor executable program code to receive the online user behavior data comprises processor executable program code to receive online user behavior data from a plurality of separate online applications.

27. The computer program product of any of claims 23 to 26, wherein the user profile data is comprised of a plurality of user characteristics including one or more of age, social class, gender, blood type, race, income, education level, home ownership status, employment status, geographic location, residency, citizenship, physical traits, personality traits, moral values, interests and lifestyles.

28. The computer program product of any of claims 23 to 27, wherein the processor executable program code to update the profile probability comprises processor executable program code to increase the profile probability of the user characteristic when the online user behavior data is consistent with the user characteristic, and further comprises processor executable program code to decrease the profile probability of the user characteristic when the online user behavior data is inconsistent with the user characteristic.

29. The computer program product of any of claims 23 to 28, wherein the processor executable program code to select online content comprises processor executable program code to select an advertisement from a set of available advertisements,

30. The computer program product of any of claims 23 to 29, wherein the processor readable medium further comprises processor executable program code to present the online content to a user in an online environment.

31. The computer program product of any of claims 23 to 30, wherein the processor executable program code to select online content comprises processor executable program code to select online content based on the user profile data and the profile probability.

32. The computer program product of any of claims 23 to 31, wherein the processor readable medium further includes:
processor executable program code to detect a content triggering event;
processor executable program code to identify a set of available content having associated parameters in response to said detecting;
processor executable program code to compare the user profile data to the associated parameters of the set of available content; and
processor executable program code to identify a closest match between the user profile data and one of the set of available content, wherein said selecting comprises selecting the online content corresponding to the closest match.

33. The computer program product of any of claims 23 to 32, wherein the processor readable medium further includes:
processor executable program code to compare the profile probability to a threshold value;
processor executable program code to display the selected online content if the profile probability exceeds the threshold value; and
processor executable program code to display default content when the profile probability does not exceed the threshold value.
